# EUROPEAN PATENT SPECIFICATION

(11) **EP 3 026 365 B1**
(45) Date of publication and mention of the grant of the patent: **03.01.2018**
(21) Application number: 14194708.5
(22) Date of filing: 25.11.2014
(51) Int. Cl.: F24J 2/06, G02B 5/04, F21S 11/00

(54) **Active sunlight redirection system**
Aktives Sonnenlichtumleitungssystem
Système actif de redirection de lumière solaire

(43) Date of publication of application: 01.06.2016
(73) Proprietor: Ymbern, Marcelo, 4125 Riehen (CH)
(72) Inventor: Ymbern, Marcelo, 4125 Riehen (CH)
(74) Representative: Vossius & Partner Patentanwälte Rechtsanwälte mbB

(56) References cited:
- EP-A2- 0 685 681
- WO-A1-2012/114267
- JP-A- H1 050 117
- US-A- 4 565 185
- US-A1- 2010 006 088
- US-A1- 2010 224 231
- US-A1- 2011 138 688

## Description

### Field of Invention

The present invention relates to a system for sunlight redirection. More specifically, the present invention is related to a system that can be used for indoor illumination and can also be used to replace the solar trackers required in systems available in prior arts to concentrate sunlight, such as hybrid solar lighting systems, concentrated photovoltaic systems and concentrated solar thermal systems. Integrating the present invention with one or more of the above-mentioned systems, the integrated system assembly becomes static and can be incorporated in buildings and vehicles without altering their aesthetics.

### Background

It should be noted that some of the following patent documents constitute prior art the average skilled person has knowledge of: US 7,639,423; CA 2,531,199; US 2013/0135744; CN 1 03 148 436, US 2009/0250095 , US 5,729,387, US 2010/0224231, US 2010/0006088, US 4,841,672, US 5,555,329, US 2007/0251569, US 2012/0170144, US 5,286,6305, US 5,802,784, EP 1 567 803, EP 2 678 719, EP 0 685 681 A2, US 2011/138688A1, JP H10 50117A, WO 2012/114267A1, US 4,565,185A. Sunlight redirection systems are used to reduce the need for electric lighting by re-directing natural light into building interiors. The use of solar light instead of electric light has a number of benefits including lower billing expenses, lower use of conventional sources for electricity generation, with consequent reduction of carbon dioxide (CO₂) emissions, and increased human comfort and well-being, by reducing eyestrain and by synchronizing the circadian rhythm. Lower eyestrain is achieved by providing a more uniform illumination than electric lighting. The circadian rhythm synchronization is achieved by sunlight having a higher energy content of high frequency blue light than typical fluorescent lighting, which has a positive effect on the mood and alertness of people.

There are various prior arts available that make use of solar light to illuminate building interiors. In general, there are two types of systems available in prior art: passive systems and active systems. Passive systems are fixed type structures and contain no moving parts. Active systems are dynamic with moving parts tracking the apparent position of the sun.

Since passive systems contain no moving parts, they are less expensive and require less maintenance. However, passive systems are comparatively less efficient than active systems due to their inability to track the changing apparent position of the sun. Many of the active systems available in prior arts have solar tubes with mirrors on top that track the sun and inject sunlight into the tube. They require additional fittings of pipes to transport the sunlight to the target destination and their form factor is typically restricted to a circular section. Moreover, they can only be used for top illumination and their use is typically restricted to the top floor of a building. Other systems like solar trackers with optical fibers are typically very expensive and are not economically feasible.

Another system available in prior art uses light refraction phenomenon, but its use is also restricted to top illumination and it is also bulky, requires installation in a particular orientation with tight tolerances, and is affected by the problem of unwanted color aberration. In addition, the systems disclosed in many prior arts require bulky reflectors and/or concentrators to direct sunlight. They also require a large space for their installation and in general do not integrate well in a building and have a negative impact on its aesthetics.

Furthermore, in most of the systems, the redirected light is not collimated and requires bulky and expensive light guiding tubes, or expensive optical fibers, for it to be transported.

Additionally, most of the systems for indoor illumination known in prior arts are not applicable for generating electricity using concentrated photovoltaic (CPV) modules. In other systems for generating electricity, CPV modules, including concentrating optics and photovoltaic cells, are mounted on a solar tracker. The building integration of these systems is not possible without seriously impacting the building aesthetics.

Additionally, most of the systems for indoor illumination known in prior arts are not applicable for generating heat using concentrated solar thermal (CST) modules. In other systems for generating heat, CST modules, including concentrating optics and receivers, are mounted on a solar tracker. The building integration of these systems is also not easy without seriously impacting the building aesthetics.

Also, while utilizing sunlight for indoor illumination, various other factors need to be addressed such as the sunlight angle (depending on latitude, longitude and time) and sunlight intensity (depending on weather) and the amount of construction or vegetation induced shading. Most systems available in prior-art do not allow the control of indoor electrical illumination. Thus, there is a need for an intelligent lighting system that can recognize one or more of the above-mentioned limitations and factors, and that can control the electrical illumination accordingly to compensate for the variation in the natural illumination.

### Summary

Embodiments of the present invention provide an active sunlight redirection system for re-directing direct sunlight towards the interior of a building, typically a ceiling or an atrium. An embodiment of the present invention can be installed inside an insulating glazing of an opening (for example window or skylight) and ensures indirect solar illumination of a wide indoor area ranging from close to distant positions from said opening.

The active sunlight redirection system of the present invention is having one modular array of double prismatic discs; the active sunlight redirection system further comprises: light re-directing area, light detecting module and control module. The light re-directing area is having a plurality of light re-directing modules with the exception of one different module. Each light re-directing module further comprises at least two discs associated with supporting frames and ball cages having plurality of balls. Further, the one different light re-directing module includes discs with contiguously filled inter-teeth spaces for acting as an angular hard stop for all the discs in the light re-directing area. The control module comprises one or more double discs that control the movement of all the other discs in the light re-directing area according to one or more environmental factors. The environmental factors include the combination of one or more factors including elevation of the sun, azimuth of the sun and intensity of sunlight. Further, the control module is associated to the light detecting module that consists of one or more detecting elements for the detection of said environmental factors.

It is an object of the present invention to provide an active sunlight redirection system to detect the azimuth and the elevation of sunlight and to ensure the system initialization from a known angular position before proceeding to track the sunlight.

It is also an object of the present invention to provide an active sunlight redirection system that can be integrated inside the standard insulated glazing of an opening facing the exterior environment.

It is also an object of the present invention to provide an active sunlight redirection system that has one or more arrangements for eliminating the color aberration of the output light introduced by color dependent variation of the refraction index of the light re-directing discs material.

In some embodiments, the present invention is coupled with one or more hybrid solar lighting (HSL) modules, including concentrating optics and optical fiber cables.

It is an object of the present invention to provide an active sunlight redirection system that enables the building integration of these hybrid solar lighting (HSL) modules by making sunlight stationary so that the HSL modules can be mounted in a fixed position.

In some embodiments, the present invention is coupled with one or more concentrated photo voltaic (CPV) modules, including concentrating optics and photovoltaic cells. Preferably, the CPV modules are arranged in such a way that it enables the system to produce electricity simultaneously while re-directing direct sunlight inside the building.

It is an object of the present invention to provide an active sunlight redirection system that enables the building integration of these concentrated photo voltaic (CPV) modules by making sunlight stationary so that the CPV modules can be mounted in a fixed position.

In some embodiments, the present invention is coupled with one or more concentrated solar thermal (CST) modules, including concentrating optics and receivers. Preferably, the CST modules are arranged in such a way that it enables the system to produce heating simultaneously while re-directing direct sunlight inside the building.

It is an object of the present invention to provide an active sunlight redirection system that enables the building integration of these concentrated solar thermal modules by making sunlight stationary so that the modules can be mounted in a fixed position.

It is also an object of the present invention to provide an active sunlight redirection system which includes an interface for wireless operability for one or more remote functionalities including but not limited to dimming and switching of indoor luminaries, blocking sunlight to reduce solar heat gain, generating historic performance reports, remote servicing, troubleshooting, remote performance monitoring, and activating and controlling a "see through" function which controls the vision angle of the exterior from the building interior through the light redirecting area.

Additional features and advantages of the system will become apparent to those skilled in the art by referring to the following detailed description taken in conjunction with the accompanying drawings.

### Brief Description of Drawings

The features of the present invention, which are believed to be novel, are set forth with particularity in the appended claims. The invention may be best understood by reference to the following description, taken in conjunction with the accompanying figures. These figures and the associated description are provided to illustrate some embodiments of the invention, and not to limit the scope of the invention.
Figure 1 is a schematic representation of an embodiment of the active sunlight redirection system, in accordance with an embodiment of the present invention;
Figure 2 is an illustration of a set of Risley wedge prisms used in prior arts for re-directing light beams;
Figure 3 is an illustration of a set of two micro-prismatic discs for re-direction of sun light in accordance with an embodiment of the present invention;
Figure 4 is a schematic section view of the prismatic discs used in the active sunlight redirection system, in accordance with an embodiment of the present invention;
Figure 5 is a schematic view of an embodiment of the active sunlight redirection system, in accordance with an embodiment of the present invention;
Figure 5a is a schematic view of a light re-directing module of the active sunlight redirection system, in accordance with an embodiment of the present invention;
Figure 5b is a schematic view of the control module of the active sunlight redirection system, in accordance with an embodiment of the present invention;
Figure 5c is a schematic view of the assembly of light re-directing modules of the active sunlight redirection system, in accordance with an embodiment of the present invention;
Figure 5d is a schematic view of the assembly of a light re-directing module of the active sunlight redirection system, in accordance with an embodiment of the present invention;
Figure 6 is a schematic view of a further embodiment of the active sunlight redirection system, in which the system is placed between the glass panes of an insulated glazing of a window;
Figure 7 is a schematic view of the two motors of the control module in accordance with an embodiment of the present invention;
Figure 8 is a block diagram of the system electronics integrated in the control module that is further integrated with the light re-directing modules;
Figure 9 is a flow diagram of the working mechanism of the active sunlight redirection system, in accordance with an embodiment of the present invention;
Figure 10 is a schematic view of how the angular position of the discs in the active sunlight redirection system is calculated, in accordance with an embodiment of the present invention;
Figure 11 is a graphical view of the efficiency versus the sun elevation and the required angular positions of the discs of the active sunlight redirection system, in accordance with an embodiment of the present invention;
Figure 12 is a schematic view of a light sensor assembly using a photo-sensor in accordance with an embodiment of the present invention;
Figure 13a is a schematic view of an embodiment of the active sunlight redirection system, in accordance with an embodiment of the present invention in which the system is placed indoors next to a window;
Figure 13b is a schematic view of a further embodiment of the active sunlight redirection system, in accordance with an embodiment of the present invention in which the system is integrated inside the double glazing of a window;
Figure 13c is a schematic view of a further embodiment of the active sunlight redirection system, in accordance with an embodiment of the present invention in which the system is placed outdoors next to a window;
Figure 13d is a schematic view of a further embodiment of the active sunlight redirection system, in accordance with an embodiment of the present invention in which the system is placed outdoors, on the roof of a multistory building;
Figure 13e is a schematic view of a further embodiment of the active sunlight redirection system, in accordance with an embodiment of the present invention in which the system is placed indoors next to an atrium glass cover;
Figure 13f is a schematic view of a further embodiment of the active sunlight redirection system, in accordance with an embodiment of the present invention in which the system is placed indoors next to a window and a reflector is used to reflect the redirected light over the ceiling;
Figure 14 is a schematic view of another embodiment of the active sunlight redirection system, in accordance with an embodiment of the present invention;
Figure 15 is a schematic view of another embodiment of the active sunlight redirection system, in accordance with an embodiment of the present invention;
Figure 16a is a schematic view of a CPV module with a Fresnel lens concentrator used in prior arts;
Figure 16b is a schematic view of a CPV module with a light guide concentrator used in prior arts;
Figure 16c is a schematic view of a system with a CPV module mounted on a solar tracker used in prior arts;
Figure 17a is a schematic view of an embodiment of the active sunlight redirection system with a CPV module, in accordance with an embodiment of the present invention;
Figure 17b is a schematic view of an embodiment of the active sunlight redirection system with combined CPV panel for electricity generation and solar illumination in a multistory building, in accordance with an embodiment of the present invention;
Fig 18a is a schematic view of the active sunlight redirection system used in a hybrid solar lighting application;
Fig 18b is a schematic view of a hybrid solar lighting system used in prior arts;
Fig 18c is a schematic view of another embodiment of the active sunlight redirection system used in a hybrid solar lighting application, in accordance with an embodiment of the present invention;
Fig 19 is a schematic view of the active sunlight redirection system with a concentrated solar thermal (CST) module, in accordance with an embodiment of the present invention.

### Detailed Description of Embodiments

The features of the invention illustrated above and below in the specification, are described with reference to the drawings summarized above. The reference numbers shown in the drawings may be used at one or more places to indicate the functional relation between the referenced elements. It should be noted that the drawings, associated descriptions, and specific implementation are provided to illustrate embodiments of the invention and not to limit the scope of the disclosure.

In addition, features, functions and mechanisms described herein are not limited to any particular sequence, and the blocks or states relating thereto can be performed in other sequences that are appropriate. For example, described blocks or states may be performed in an order other than that specifically disclosed, or multiple blocks or states may be combined into a single block or state.

It should be noted that the terms "a" or "an", as used herein, may be defined as one or more than one. The term "another", as used herein, is defined as at least a second or more. The terms "including" and/or "having" as used herein, are defined as comprising (i.e. open transition).

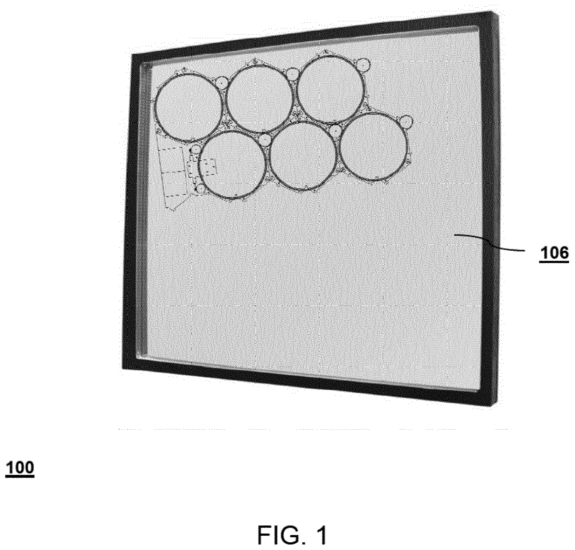

In accordance with the figure 1, an embodiment of the present invention active sunlight redirection system (100) can be installed inside an insulating glazing of an opening (106) facing the exterior environment. In the embodiment of the present invention, the active sunlight redirection system is placed in between two panes of glass of an insulated glazing unit. In general, the glass pane in contact with outdoors is called the top glass pane and the one in contact with indoors is called the bottom glass pane. This convention, top for the outdoors side and bottom for the indoor side, is also used to name the rest of the components of the system.

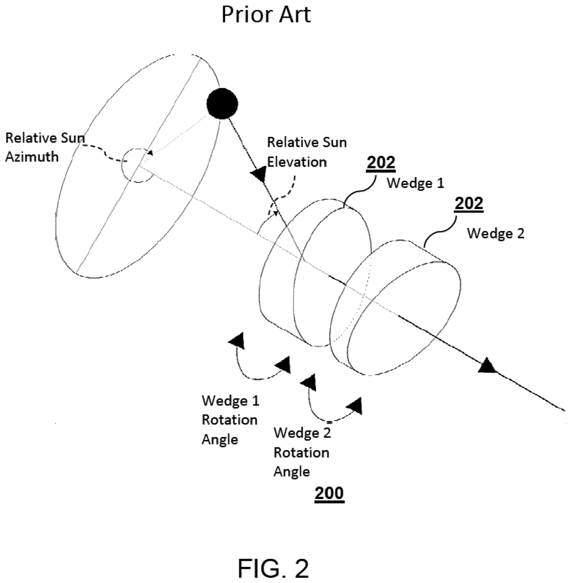

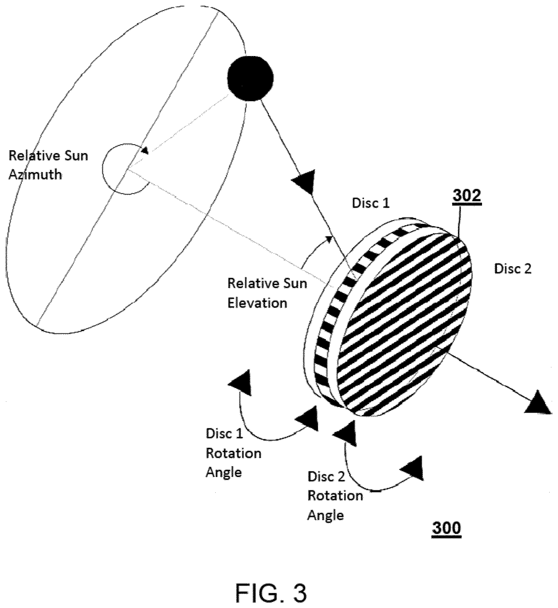

An embodiment of the present invention is an active sunlight redirection system that consists of a modular array of double prismatic discs. One face of each prismatic disc is preferably flat and the profile of the other face is textured as a regular array of linear prisms. This is equivalent to a Fresnel decomposition of the wedge prism pair in the original Risley prism set. The wedge prisms (202) known in prior art (200) are shown in figure 2. Figure 3 depicts the arrangement of the prismatic discs (302) to redirect sunlight in accordance to an embodiment (300) of the present invention. The advantage of this surface arrangement of prismatic discs over the wedge prisms is that it enables the system to have big diameter discs with a much-reduced thickness as compared to the thickness of the wedge prisms.

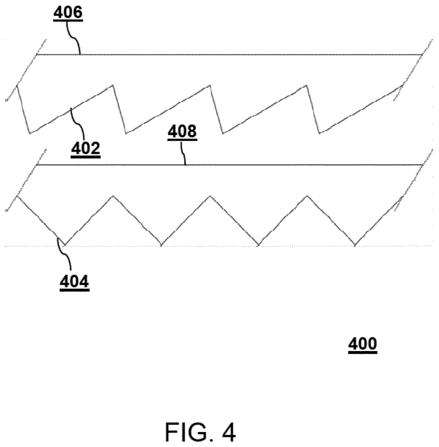

As depicted in figure 4, in an embodiment (400) of the present invention, the prismatic discs have prismatic structures (402, 404) typically on the indoors side, also called bottom side, and have flat faces (406, 408) on the outdoor side, also called top side. The performance of the system for re-directing direct sunlight typically depends on the material used for the discs (and in particular of its refraction index) as well as of the angles of the prismatic structures of the discs. In an embodiment of the present invention, the discs are made of PMMA material. Also, in this embodiment the bottom disc (404) has an apex angle of 90 degree and the other two angles of the same 45 degree value. The top disc (402) has an apex value of 70.7 degree and the other two angles of 77.6 degree and of 31.7 degree. It should be noted that the invention is not restricted to a particular material and it may utilize any material having similar or likely to be similar characteristics (for e.g. refractive index) now known or later developed. Similarly, the angles of the prismatic structure may be varied in accordance with the refractive index of the particular material being used or in accordance with the other embodiments and applications of the invention discussed explicitly or implicitly.

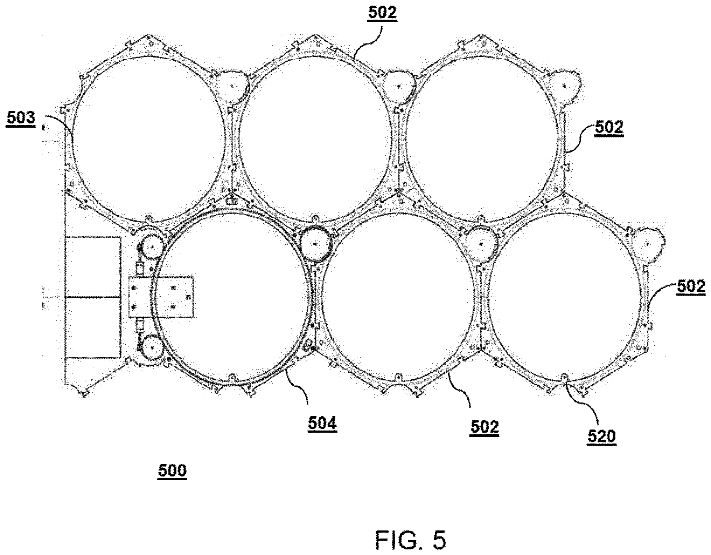

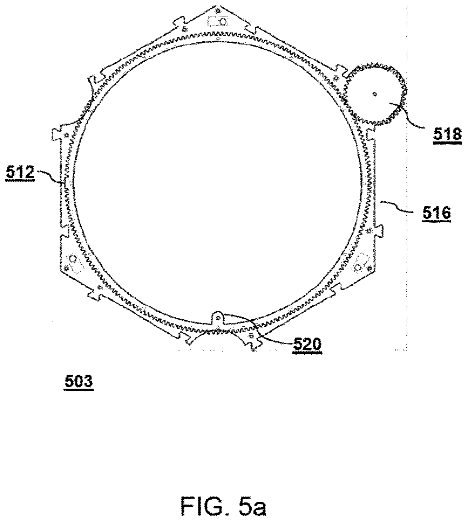

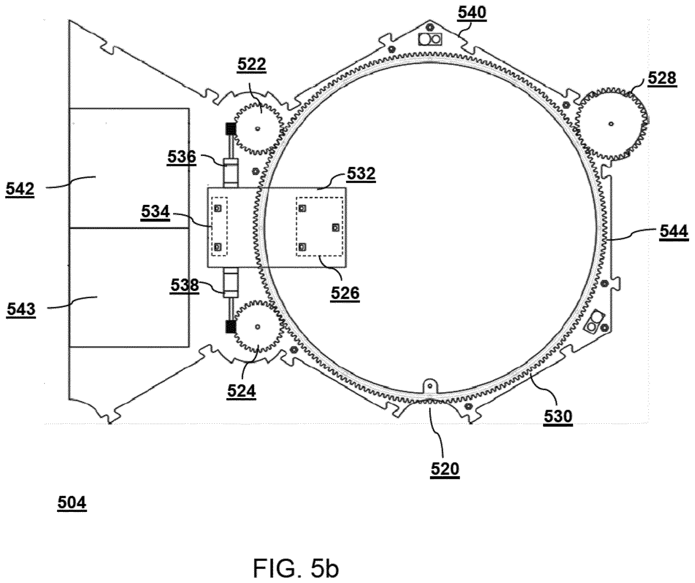

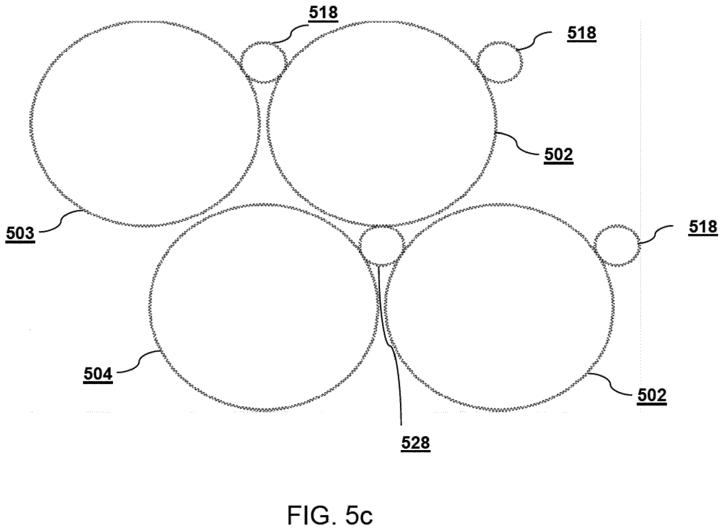

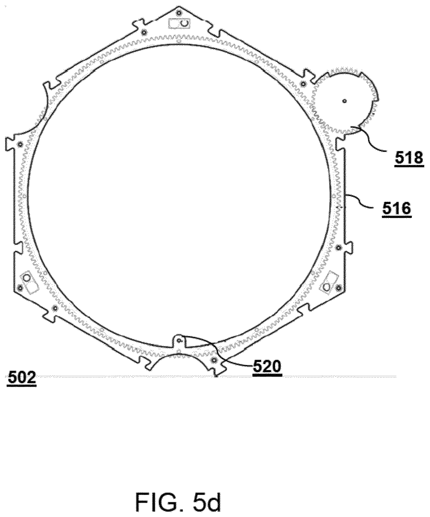

In accordance with figure 5, the active sunlight redirection system of the present invention provides the active sunlight redirection system (500) for indoor illumination that is comprised of a light re-directing area. The light re-directing area is composed of one or more alike sets of light re-directing modules (502) with an exception of at least one different module (503) that are assembled together to form the light re-directing area of the required dimensions. In addition to the components similar to the other light re-directing modules, the one different module (503) comprises the discs with one or more contiguous inter-teeth spaces (512) filled in, acting as an angular hard stop for all the discs in the light re-directing modules.

As illustrated in figure 5a, the space filled in between the teeth (512) blocks the rotation movement at two extreme angular positions when it reaches the gear (518), one turning clockwise and the other turning counter clockwise. This feature is used as an angular hard stop and defines a home position to initialize the system from a known angular position for all discs by moving all the discs until the extreme disc with the filled in space between teeth (512) arrives to the angular hard stop position and the movement is then blocked for all the discs in the same layer, top or bottom, of the light re-directing area.

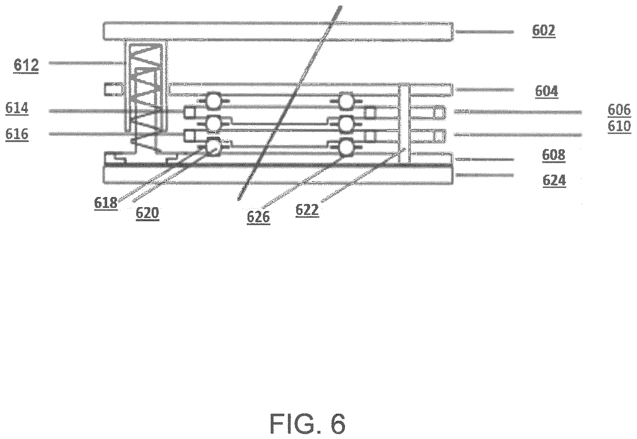

As depicted in figure 5d and figure 6, the light re-directing module (502) comprises a top frame (604), a bottom frame (608), top ball cage with plurality of balls, intermediate ball cage with plurality of balls, bottom ball cage with plurality of balls, top disc (614), bottom disc (616), gears (606, 610), common gear shaft (622), spring spacer (612), double adhesive tape strips, fasteners (screws and bolts) and an assembly locking pin.

As depicted in figure 5 and 5b, the active sunlight redirection system (500) further comprises a control module (504) that is responsible for the movement of all light re-directing modules (502, 503). The control module (504) is similar to the light re-directing modules (502) and additionally consists of a top disc motor (536), a bottom disc motor (538), motor mounting frames, worm gears, drive gears (522, 524) and shafts. The active sunlight redirection system further consists of a light detecting module (532) associated to the control module. In the embodiment of the present invention, the light detecting module comprises input sensors (534) and output sensors (526) for detecting the intensity of the input light, the elevation of the input light, the intensity of the output light and the alignment error of the output light.

The control module coupled with the light detecting module is responsible for the orientation of the sunlight re-directing modules. The sensors of the light detecting module are used to adjust the angular position of the discs according to the changing apparent position of the sun.

In an exemplary embodiment of the present invention, the light detecting module (532) has five sensors. At the light input side (534) of the active sunlight redirection system there are the input light intensity sensor and the input light elevation sensor. At the light output side (526) of the active sunlight redirection system, there are the output light alignment rough error sensor, the output light alignment fine error sensor and the output light intensity sensor. It should be noted that the numbers and types of sensors should not restrict the invention in any manner. The present invention may have a flexible number of sensors in accordance with the other embodiments of the invention discussed explicitly or implicitly and the active sunlight redirection system may utilize other types of sensors for detecting other environmental factors. Likewise, the invention may include a plurality of components and/or mechanisms discussed above or below in the description.

In an exemplary embodiment, the light detecting module may use photo-resistors as sensors that sense the amount of light arriving to the active sunlight redirection system. Two of these sensors, one for input and another for output, measure the light intensity at input and output respectively. In the embodiment, the sensor consists of a photo-resistor placed on a plane parallel to the discs with a thin round mask just on top of it.

In an embodiment of the present invention, the control module (504) comprises two motor drive trains that are identical sets having a top motor (536) and a bottom motor (538), for the top discs and bottom discs respectively. Each motor drive train includes a DC motor with a gear box on one end and a quadrature encoder on the other. The output shaft of each gear box is coupled with a worm gear that is meshed with a gear that is in turn meshed with one of the discs in the control module, top disc for the top motor drive train and bottom disc for the bottom motor drive train.

Figure 5c illustrates the top view of the light re-directing area with a number of light re-directing modules (502, 503) assembled together (for simplicity, only the top discs and the top gears are shown). In accordance with figure 5b, the rotation of the top motor (536) is transmitted by the top worm gear to the top drive gear (522) and from it to the top disc (530) that in turn transmits the rotation to the top control module gear (528). In accordance with figure 5b and 5c, when the control module is connected with the light re-directing modules, the top gear of the control module (528) gets connected with the top discs of up to two light re-directing modules (one above and one to the right) that in turn transmit the rotation to those modules' top gears (518). As a number of light re-directing modules (502) are assembled together, the rotation of the control module top gear (528) is transmitted to all top discs and top gears in the whole light re-directing area. Similarly, the bottom motor (538) transmits its rotation to all bottom discs and bottom gears in the whole light re-directing area.

In an embodiment of the present invention as illustrated in figure 5, the outline of the frame parts (top and bottom) is close to a hexagon, which is the optimum shape for packing circles. The frame outline deviates from a hexagon to enable assembling the modules together and meshing each gear with up to three discs, one in the same module and two in contiguous modules, one above and one to the right.

In another embodiment of the present invention, the rotational motion of the discs can be transmitted by magnetic coupling between the control module and the light redirection area. This can be done, for example, by splitting each of the driving gears in the control module in two separate gears. These two separate gears would have magnets on them and the two gears would be magnetically coupled. In this way, a big part of the control module, including the electronics and motors, could be placed outside the insulated glazing while the rest of the control module and the light re-direction area could be placed inside.

In an embodiment of the present invention, the discs of the light re-directing modules (502) are locked to a fixed angular position before being assembled together. In this way, when they are assembled together, it ensures that all the discs have their micro-prismatic structures synchronized in the same angular position. This locking is done by inserting a mounting locking pin for each module that goes through a mounting locking hole (520) on the top and the bottom frames as shown in figure 5. In order to fit in the mounting locking pin the two discs need to be placed at a certain angular position so that a hole on them is aligned with the hole in the frames and the mounting locking pin can be inserted. The locking pin is much longer than the internal space between glass panes in an insulated glazing unit. Therefore, after all the light re-directing modules (502) and the control module (504) are assembled together over the bottom glass pane, the top glass pane cannot be installed until all mounting locking pins are removed, which ensures that this happens and that all the discs are free to turn driven by their respective motors.

According to figure 5 and 5b, in an embodiment of the present invention, a control module (504) is assembled at the left bottom corner of the system. It contains a control electronics board (542), a solar cell (543), a light detecting module (532) and two motor drive trains in addition to all other elements of a regular light redirection module, including top and bottom light re-directing discs and top and bottom gears. Light re-directing modules (502) are assembled to the control module (504) to the right of it and above it. As described in other embodiments, the one different light re-directing module is placed on the top left corner and it has its discs with one or more contiguous inter tooth spaces (512) filled in.

In accordance to other embodiments of the present invention the active sunlight redirection system can be installed at an opening or window facing the exterior environment. The embodiments of the present invention may be adapted to be placed or fixed on a window or roof or other places. In an embodiment of the present invention, the active sunlight redirection system can be fixed or modularly placed inside the insulated glazing of a window. In another embodiment of the present invention the active sunlight redirection system has its own cover, preferably of transparent material (for e.g. transparent acrylic material). In an embodiment of the present invention, the active sunlight redirection system can be placed indoors next to the top part of a window and typically hung from the ceiling from a reel or by other means.

Referring to figure 6, in an embodiment of the present invention, the two light redirecting discs have linear micro-prismatic structures on their bottom faces. The discs are guided in their rotation by sets of bearing balls rotating inside grooves excavated in the inner side of the frame parts, top and bottom, and on both sides of the top and bottom discs. The balls (620) are placed into the holes of ball spacer parts (618) that keep them at a fixed distance of each other. The balls (620) run inside grooves (626) in the inner side of the top and bottom frames and on both sides of both discs. Both discs, top (614) and bottom (616), have teeth on their perimeter. There are two gears, the top gear (606) that has its teeth meshed with the top disc teeth, and the bottom gear (610) that has its teeth meshed with the bottom disc. The two gears are placed one on top of the other and have a common shaft (622) that goes through their center and is fixed on the frame parts.

In an embodiment of the present invention the active sunlight redirection system is placed inside the insulated glazing of a window as depicted in figure 6. The active sunlight redirection system is positioned between the top glass pane (602) and the bottom glass pane (624) having the arrangement of the system substantially similar to the other embodiments. A spring spacer (612) is compressed in between the top glass pane (602) and the bottom frame (608), pressing it against the bottom glass pane (624). The bottom frame (608) has small strips of double-sided adhesive tape and the pressure provided by the spring spacer (612) ensures the integrity of this binding. The spring spacer (612) has a central solid shaft so that if for any reason the top glass pane is deformed inwards (glass bow, wind pressure, thermal expansion, etc.) this central shaft holds the top glass pane (602) and avoids it from pressing the top frame (604), which may have the undesirable effect of an increased friction in the rotation of the discs.

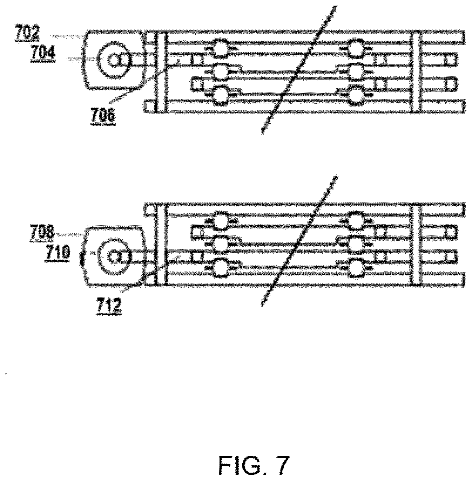

In accordance with figure 7, the two motors (702, 708) of the control module drive one pair of light re-direction discs and their associated gears, all contained in the control module. The top motor (702) is coupled to the top worm gear (704), meshed with the top drive gear (706), meshed with the top disc, that in turn is meshed with the top gear in the control module. Similarly, the bottom motor (708) is coupled with the bottom worm gear (710), meshed with the bottom drive gear (712), meshed with the bottom disc, that in turn is meshed with the top gear in the control module.

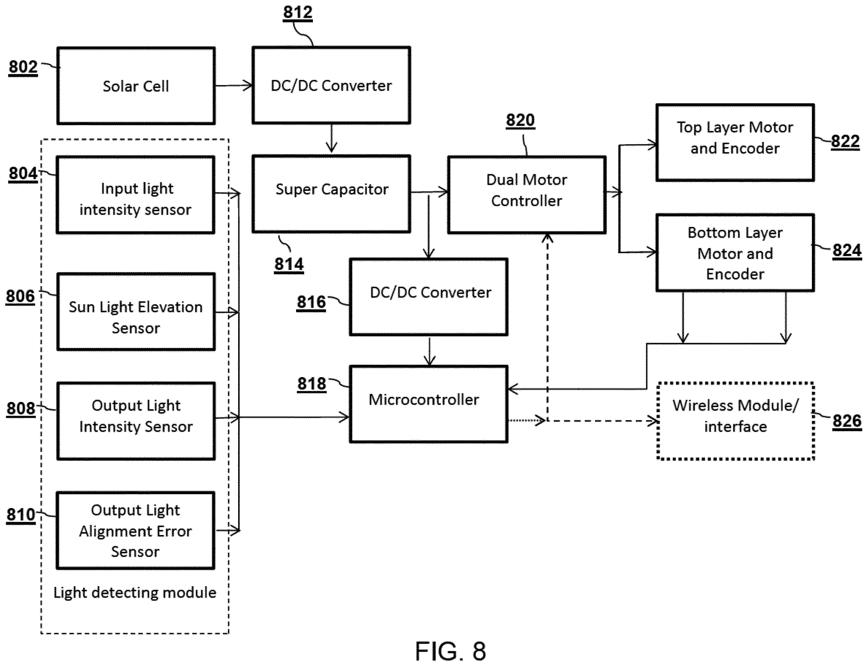

In an embodiment of the present invention, the control module has electronics with a block diagram as shown in figure 8. These electronics includes a microcontroller (818), a solar cell (802), one or more super-capacitors (814) preferably placed in series, DC/DC voltage converters (812,816) and a dual motor controller (820). These electronics enable the system to continuously track the apparent position of the sun even during unfavorable weather conditions by storing enough energy in the super-capacitors for a maximum predetermined period of cloudy weather during which the active sunlight redirection system continues to follow the sun. This allows for a fast reaction time of the active sunlight redirection system when the sun shines again.

In an embodiment of the present invention, the active sunlight redirection system may have an external AC/DC adapter in place of the solar cell, the two DC/DC converters and the super capacitors.

In an embodiment of the present invention, the control module of the active sunlight redirection system may have the light detecting module on the same control board. In another embodiment of the present invention, the active sunlight redirection system may have a separate light detecting module coupled with the control module. Similarly, other modifications within the scope of the invention are also possible.

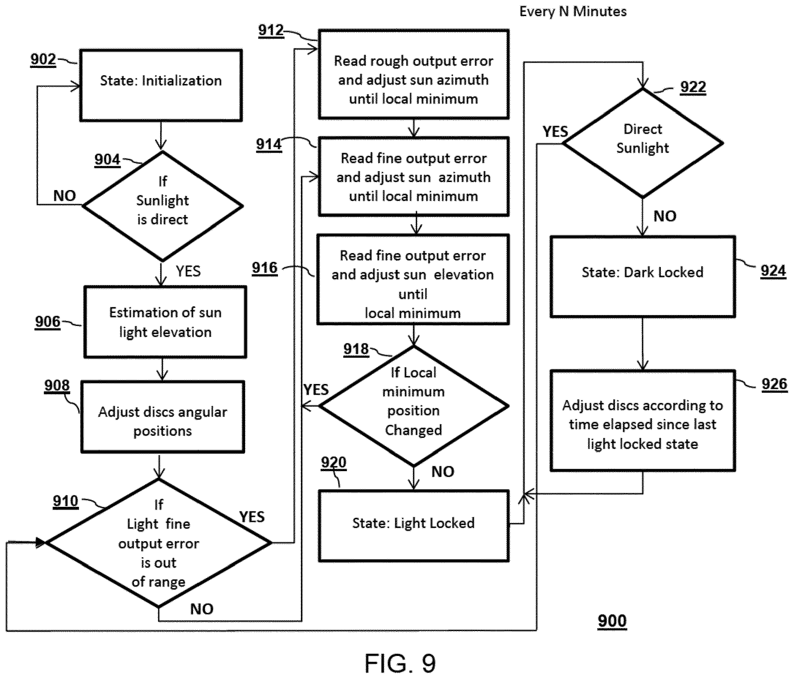

One or more embodiments of the present invention involve an algorithm (900) to rotate the discs of the light re-directing area according to one or more environmental factors. The environmental factors referred above may be the combination of one of more factors including but not limited to elevation of the sun, azimuth of the sun and intensity of sunlight. As depicted in figure 9, at any given moment, the system can be in any of the following three states: initialization state, light locked state and dark locked state.

The mechanism initiates at the initialization state, in step (902). In this initialization state the system does not know the relative position of the sun. The first action in this initialization state is to align all the discs against their angular hard stop. Further, in step (904) the system waits until the input light sensors indicate the presence of direct sunlight (input light intensity reading above a certain threshold and consistent with input light elevation sensor reading). If direct sunlight is detected, in a further step (906) the system first reads the input sunlight intensity and input sunlight elevation sensors and uses these readings to estimate the sun elevation. The system may use the estimated sun elevation to address a table stored in the system memory. The table indicates the required disc angular movement of the top and bottom discs with respect to the sun azimuth for various sun elevation values. The system starts the sun azimuth search by using an initial sun azimuth value and from that, it calculates the required top and bottom disc angular positions by adding the angular offset values extrapolated from the table, then in the next step (908) the top and bottom discs are moved accordingly. Further in step (910), the system checks if the output light fine error sensor reading is outside its operating range. If that is the case, in step (912) it reads the output light rough error and scans all the possible sun azimuth values until it finds a local minimum reading of the sensor. In step (914), the system reads the output light fine error and adjusts the sun azimuth estimation, adjusting the discs accordingly, until it finds a local minimum reading of the sensor. Furthermore, in step (916), it adjusts the sun elevation estimation, adjusting the discs accordingly, until it finds a local minimum reading of the sensor. In step (918) it checks if the azimuth and altitude estimation local minimums have not changed and repeat the previous process from step (914) until it is so. When the azimuth and altitude estimation local minimums have not changed in step (918), in further step (920) the system changes state to the "light locked" state and it is then locked with the apparent position of the sun. If, alternatively, in step (910) the first reading of the output light fine error sensor shows that it is inside its operating range, the process can be made faster by going directly to the azimuth and altitude estimation optimizations using this sensor as depicted in figure 9. Once the system is in this "light locked" state it proceeds to re-adjust the position of its discs at fixed time intervals (for e.g. every N minutes). In an exemplary embodiment, the system adjusts the position of its discs every four minutes, given that the apparent sun angular position moves by no more than approximately 1 degree in that time period. The adjustment is performed by first checking the input sunlight intensity and elevation to determine if there is direct sunlight in step (922). If there is direct sunlight, the system goes back to step (910) and continues from there. If, instead, it determines that there is no direct sunlight then it proceeds to the step (924) and changes state to the "dark locked" state. In further step (926), the system adjusts positions of the discs to a predicted sun elevation and azimuth values. The system predicts the sun position, elevation and azimuth, by using the information stored of the most recent estimated sun positions while being in the "light locked" state and the time that has elapsed since then as well as the estimated sun position at the same time of the day in previous days while being in the "light locked" state. This procedure will minimize the required movement of the discs when the direct sunlight returns and it will eliminate or minimize potential glare situations when the light is incorrectly deviated downwards due to an incorrect adjustment of the discs' angular position.

If being in the light locked state the output light direction sensor failed to confirm that the output light was perpendicular to the discs planes, signaled by an excessive value of the output light error sensors, the system would change state to the "initialization" state. This could only happen in case of an error of some kind, and this event will be logged by the system for future reference. This possibility is, for presentation simplicity, not shown in the flow diagram of figure 9.

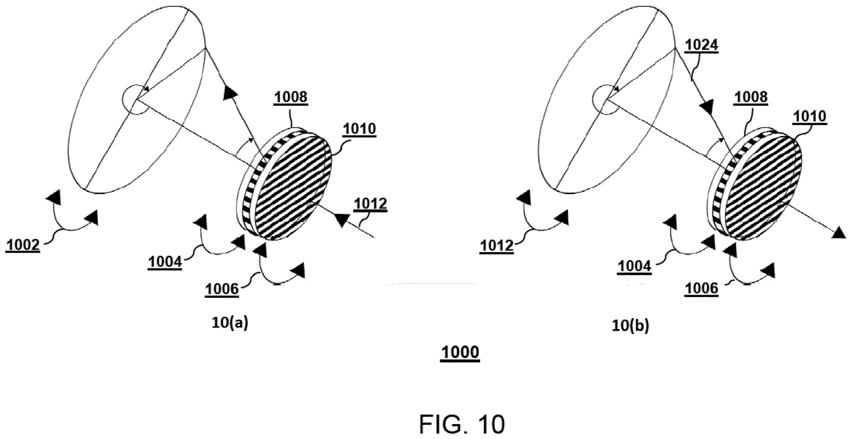

The orientation, elevation and azimuth, of the output light depend on the orientation, elevation and azimuth of the input light, and of the angular position of the discs. When the output light is perpendicular to the discs planes, the output light elevation is estimated as zero. The figure 10 depicts the method (1000) to calculate the required discs angular positions for any given input light orientation. The required angular positions of the discs to achieve a zero output light elevation for a particular sun elevation can be easily calculated by using a symmetry of the optical system shown in figures 10(a) and 10(b). Figure 10(b) shows disk1 (1008) and disk2 (1010) with their rotation angles (1004) and (1006). In figure 10(b) light is injected, conventionally, from the input direction (1024). The problem of determining these rotation angles (1004, 1006) can be solved by hypothetically inverting the direction of the light, injecting a zero elevation light at the output (1012), and calculating the output light elevation at the input for every given combination of angular discs positions. This is shown in figure 10(a) that shows disk1 (1008) and disk2 (1010) with (1004) and (1006) being their rotation angles. In figure 10(a) light is injected from the output direction (1012). This is the way in which the table of required disc angular offsets with respect to the sun azimuth is calculated for a number of possible sunlight elevations. These angular offsets are independent of the sun azimuth. Therefore, the sun azimuth can be found by looking for the minimum reading of the output light error sensors while scanning all possible sun azimuth positions and maintaining the fixed discs angular offsets with respect to the hypothetical sun azimuth. In the case that the required output light orientation has an elevation different than zero, for example 1 degree, an analogous method could be used by injecting that light from the output to the input, as depicted in figure 10(a), and calculating the resulting light elevation and azimuth at the input side for all possible angular positions of the discs. This calculation can be made by using a vector form of the Snell law for light refraction in dielectric materials. In the case of requiring an output light elevation other than zero, the output light alignment sensors would need a misalignment between its light input mask and its sensor mask of the same angular magnitude as the required output light elevation. In an alternative embodiment, the required output light elevation other than zero could be achieved by tilting the active sunlight redirection system in the required angular amount. This is particularly applicable for the external active sunlight redirection system embodiment, not integrated inside an insulated glazing, where the required output light angle can be achieved simply by tilting the whole module during its installation.

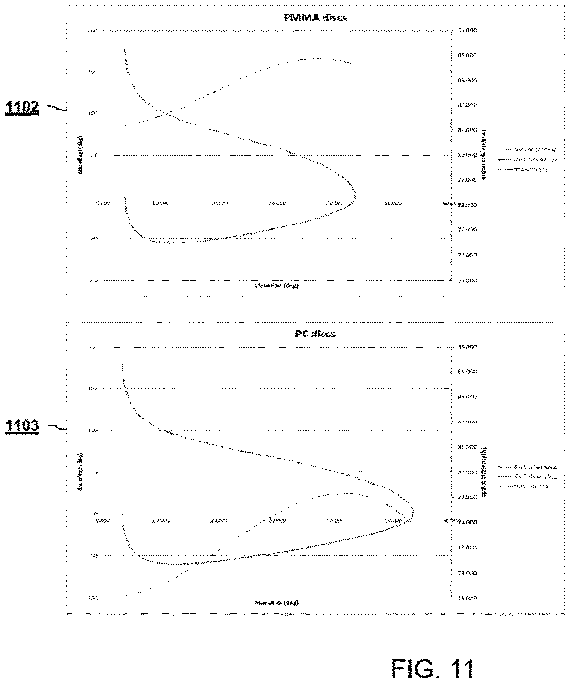

As illustrated in figure 11, the required angular position of the discs and optical efficiency for a zero elevation output have been calculated for the example implementation described before, with discs of PMMA material (1102), disc1 linear prism array angles 90degree/ 45degree/ 45degree, disc2 linear prism array angles 70.7degree/ 77.6degree/ 31.7degree. This is also shown in fig 11 for discs of the same geometry and PC material (1103).

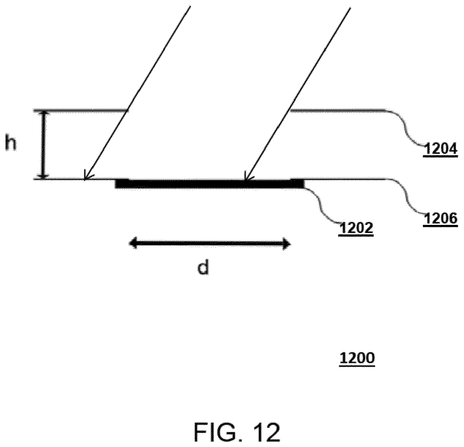

Figure 12, shows a schematic view of an embodiment of the light direction sensors used in the control module, the input sun elevation sensor and the output light alignment sensors. The sensor (1200) has two light masks, an input light mask (1204) and an output light mask (1206). These masks are made of a thin opaque material. They are placed parallel one on top of the other at a distance 'h' between them and both have a hole of diameter 'd' vertically aligned. The output light mask (1206) is placed in top of a flat photo resistor (1202) that is centered with the output light mask hole so that all the area under the output light mask hole is active. The light being sensed gets first through the input light mask (1204) hole and then gets to the output light mask (1206). A fraction of the all the input light that gets through the input mask hole gets to the photo-resistor (1202) active area right under the output light mask (1206) hole. That fraction depends on the input light elevation with respect to the masks surface. It is 'maximum' for an input light with zero elevation and 'zero' when the elevation is big enough so that no input light reaches the photo sensor. In the system input side there are two sensors, an input light elevation sensor and an input light intensity sensor. The input light intensity sensor is slightly different to the light senor described as it has no input light mask, just an output light mask and a photo sensor under it. The input elevation sensor is constructed as it has been previously described. The combined readings of these two sensors can determine if the input light is direct sunlight and, when it is, it can also give an estimation of the input light elevation by using a table that relates the ratio of the two sensor readings with the input light relative elevation. Similarly, for the output, two sensors are used to determine the output light alignment error with respect to the perpendicular to the sensors plane. In an embodiment of the present invention the system has three output light sensors: an output light intensity sensor, an output light rough alignment error sensor and an output light fine alignment error sensor.

It should be noted that the active sunlight redirection system may use an additional number of photo sensors. These additional sensors could have different values of the distance (h) between their input and output light masks and could be used, either in the input or in the output, to determine light input elevation or output light alignment error with different measurement ranges and resolutions. The output alignment error could have a small angular offset between the position of the top mask hole and the position of the bottom mask hole. In that way the sensor will give a zero output alignment error when the output light is slightly deviated from the discs and sensors plane normal and aimed with a very low angle, typically 1 degree, to the ceiling.

The invention should not be restricted to the use of a photo-resistor type sensor. The active sunlight redirection system may use other types of sensors. In an embodiment of the present invention, the active sunlight redirection system may use a photo-diode sensor instead of a photo-resistor. In another embodiment of the present invention, the active sunlight redirection system may use a pin-hole and a CCD image sensor. In another embodiment, the active sunlight redirection system may use a sensor comprised by a rotating platform with a vertical shade and two photo-resistors, one at each side of the shade.

The systems for indoor illumination using light refraction like the present invention are affected by a color aberration defect that creates artifacts of colored light (rainbow effect) on the perimeter of the illuminated area. The cause of this effect is the dispersion of the refraction index of the discs material between the different frequencies in the sunlight visible spectrum, which causes light of different frequencies in sunlight to be refracted at slightly different angles by the light redirection discs.

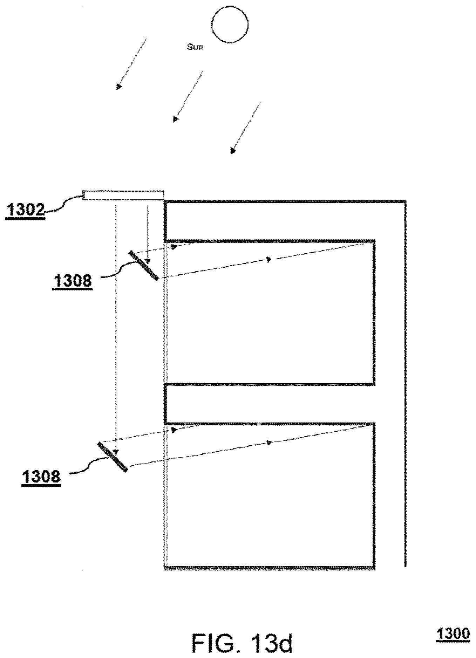

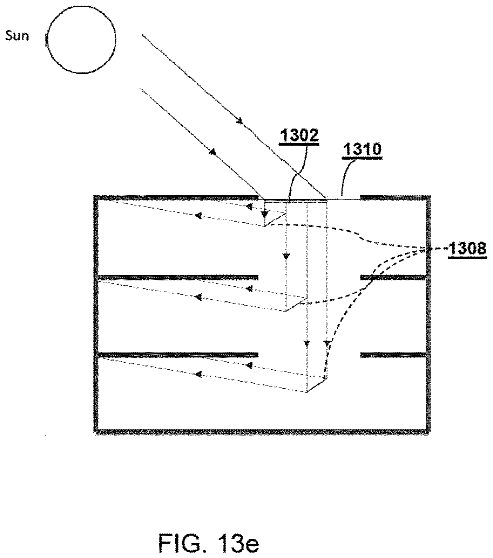

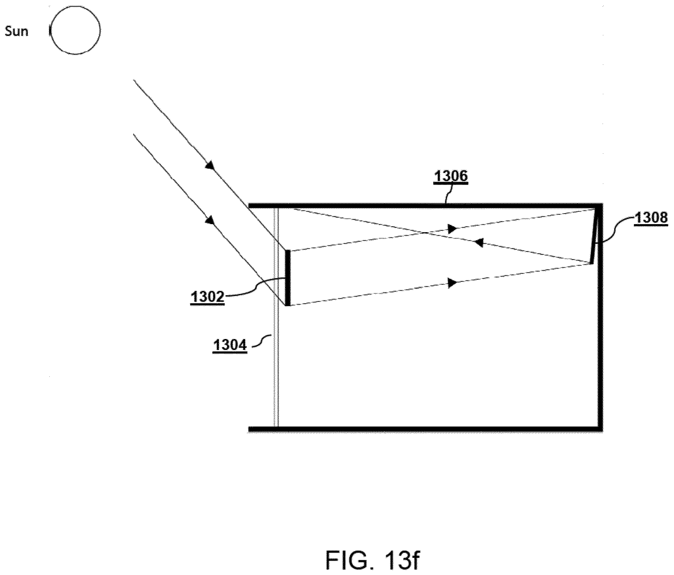

To overcome this problem of color aberration, in an embodiment of the present invention, a small curvature (high curvature radius) in one of the prism sides of one of the discs is introduced. This produces an angular dispersion on the redirected light beam that masks the colored rings making their light appear white. In this embodiment, when this curvature is introduced in the bottom disc that typically has both linear prism base angles equal, the active sunlight redirection system can choose to correct or not this color aberration defect by alternative positioning the curved side or the flat side in the path of the output light beam. This is particularly attractive for maintaining the "see through" function with control of the vision angle as described later on. An alternate solution is to add a narrow beam diffuser placed at the light output or at the light input so that it introduces an angular dispersion of the light output, with the same result of masking the color aberration effect. Still another alternate solution is to introduce a fine texturing in the typically flat top side of one of the prismatic discs so that it introduces an angular dispersion of the light output, with the same result of masking the color aberration effect. Still another alternative solution is to bound a narrow beam diffusor to a mirror when one is used in the redirected path of the light as represented further on in Figures 13d, 13e and 13f.

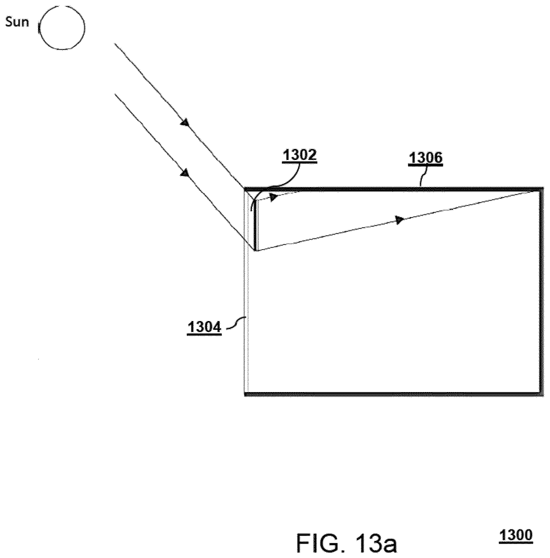

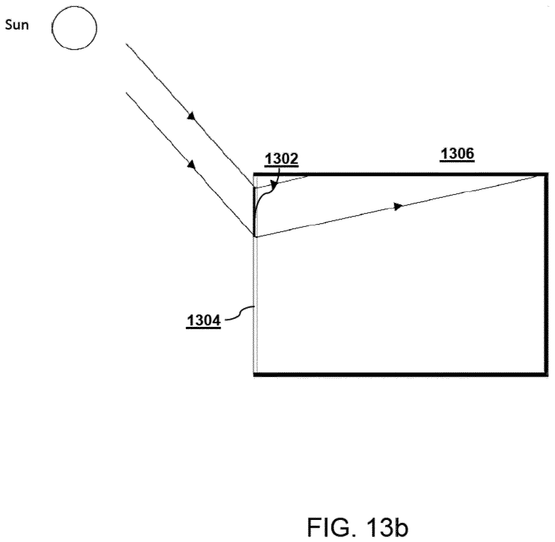

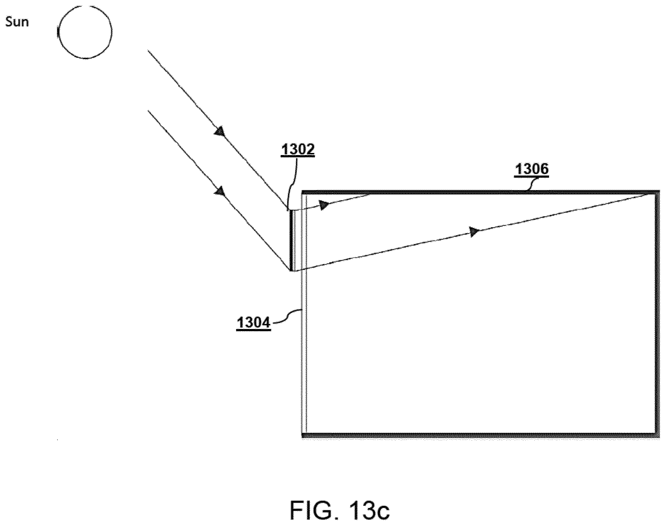

In some embodiments of the present invention, as depicted in figures 13a, 13c, 13d, 13e and 13f, the active sunlight redirection system is not integrated on the insulated glazing of a window. In an exemplary embodiment of the present invention shown in figure 13a, the active sunlight redirection system (1302) can be installed indoors, next to a window (1304) on the high part of it and above the line of sight. In this embodiment the system works ideally next to windows with South orientation and can also work next to windows with East and West orientations. In another embodiment of the present invention shown in figure 13d the active sunlight redirection system is installed horizontally on the roof of a building slightly protruding to one side, and the system (1302) is combined with one or more reflectors (1308) to re-direct the sunlight towards the ceiling inside the building through the top part of a window. This arrangement enables redirected sunlight illumination with windows of all orientations, including those orientated towards North. This arrangement also enables redirected sunlight illumination in windows that could otherwise not have it due to the presence of obstacles, like other buildings or trees. In another embodiment of the present invention shown in figure 13e the active sunlight redirection system (1302) is installed horizontally under the top glazing of an atrium (1310). The system (1302) is combined with reflectors (1308), placed inside the atrium to redirect the light towards the ceilings inside the building. In an embodiment of the present invention, the active sunlight redirection system is integrated on the insulated glazing of a window as depicted in figure 13b. In some cases, the geometry of the building may be like the one showed in Fig 13f, where the window is receded and the building façade creates a shadow area on the top part of the window. In such cases, the active sunlight redirection system may need to be placed in a low position so that it gets incoming sunlight. This low position may not allow it to illuminate a wide area of the room from a position close to the window to another far away from it by redirecting the sunlight to the ceiling. In such cases, it may be necessary to add a reflector (1308) on the deep side of the room and flushed with the ceiling (1306). In this arrangement, the active sunlight redirection system (1302) redirects the light towards the reflector (1308) that in turn reflects it towards the ceiling (1306).

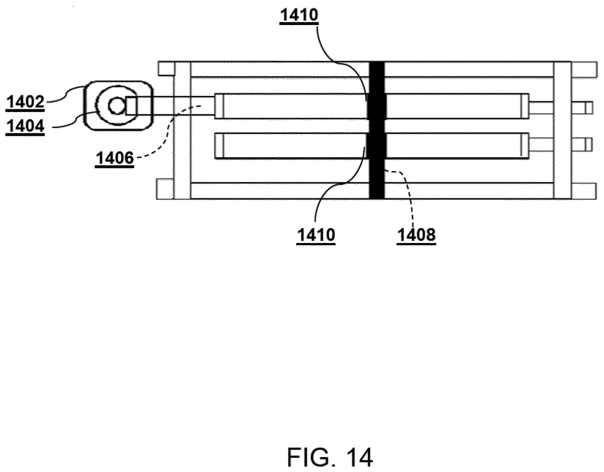

Various alternatives and modifications can be made in the above described embodiments. As depicted in figure 14, in the active sunlight redirection system the movement of the discs can be guided by using a central shaft (1408) instead of the balls, ball spacers and grooves in discs and frames. Optionally bearings (1410) can be used placed in the center of each disc and with the central shaft (1408) placed inside them. In figure 14, the top motor (1402) coupled with the worm gear (1404) and which is further attached to a top drive gear (1406) is shown.

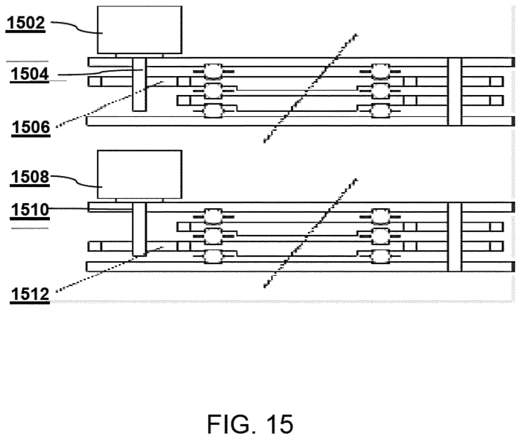

In another embodiment of the present invention as depicted in figure 15, the active sunlight redirection system may use stepper motors instead of DC motors, quadrature encoders and worm gears. The stepper motors (1502, 1508) are mounted with their axis perpendicular to the discs planes while the DC motors were mounted with their axis parallel to the discs planes. In figure 15, the top drive gear (1506) and the bottom drive gear (1512) are attached to the top motor (1502) and bottom motor (1508) respectively.

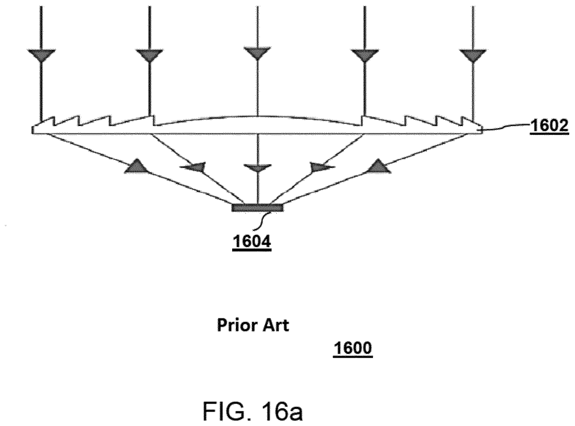

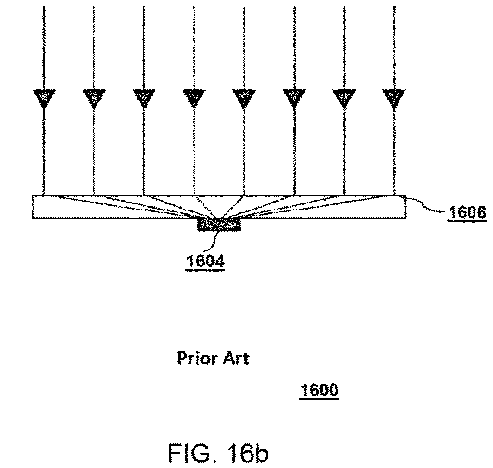

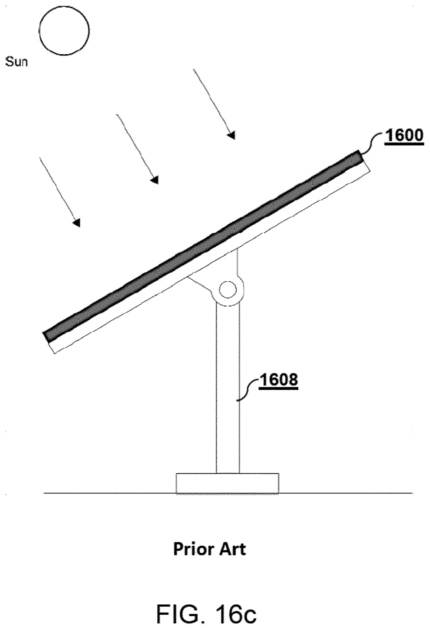

Figures 16a, 16b and 16c depict systems disclosed in prior arts using concentrated solar light. Figure 16a and figure 16b are applicable to hybrid solar lighting (HSL), concentrated photovoltaic (CPV) and concentrated solar thermal (CST) systems, where the element (1604) is an optical fiber (or optical fiber bundle), a photo voltaic cell, or a solar thermal receiver, respectively. These systems use Fresnel lens (1602) or light guides (1606) to concentrate sunlight. These systems of prior arts need to be mounted on a solar tracker (1608) so that sunlight is perpendicular to their surface at all times.

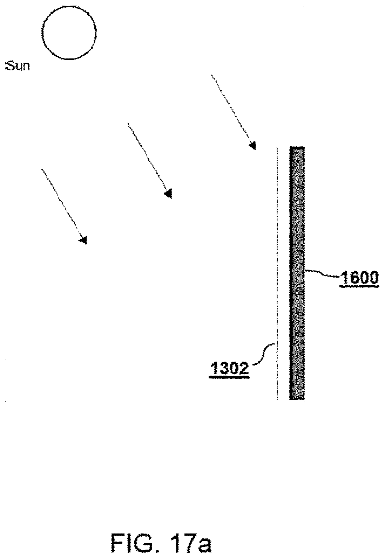

As depicted in figure 17a in an embodiment of the present invention, the active sunlight redirection system (1302) is coupled with a concentrated solar light panel (1600). That concentrated solar light panel (1600) can either be a hybrid solar lighting (HSL) panel, a concentrated photovoltaic (CPV) panel or a concentrated solar thermal (CST) panel. By making sunlight stationary the active sunlight redirection system (1302) allows these panels (HSL or CPV or CST) (1600) to be mounted at a fixed position, which allows their integration in a building without negatively impacting its aesthetics.

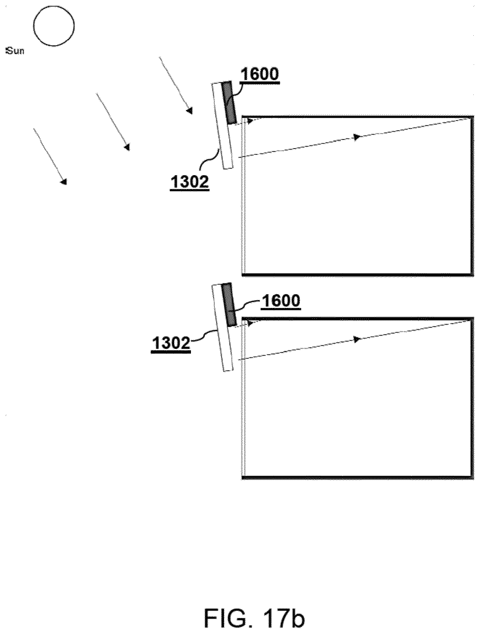

As depicted in figure 17b, in an embodiment of the present invention the active sunlight redirection system (1302) is coupled with a concentrated solar panel (1600) that can be either a concentrated photovoltaic (CPV) panel or a concentrated solar thermal (CST) panel, having one or more modules for either producing electricity (CPV) or heating (CST). In the embodiment, the system can produce either electricity (CPV) or heating (CST) while simultaneously illuminating the building interior. In an embodiment of the present invention, the active sunlight redirection system (1302) coupled with concentrated solar panels (1600) (HSL, CPV or CST) can be integrated into the building envelope and in particular in the insulated glazing units. Concentrated solar panels (either HSL, CPV or CST) require of a means to concentrate sunlight, this could be done with planar light guides so that the total assembly has a small thickness and can be integrated inside an insulated glazing unit or in the glass cover of a building. An embodiment of the present invention in combination with CPV modules can be used in electrical vehicles by integrating the active sunlight redirection system combined with CPV modules in the vehicle's roof glazing or other external surfaces where the combined system is capable of providing a higher efficiency and a lower cost than regular photovoltaic panels.

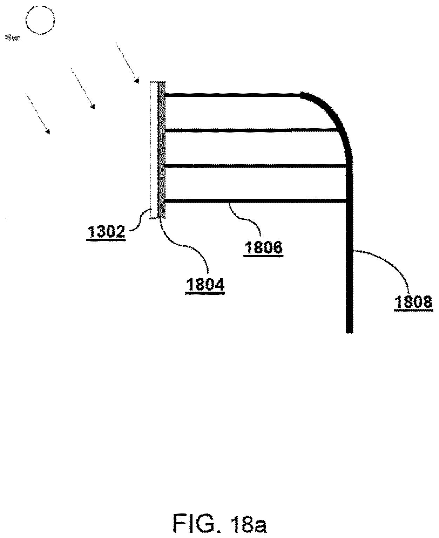

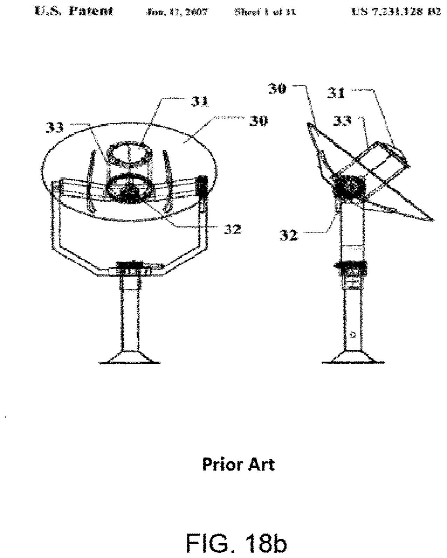

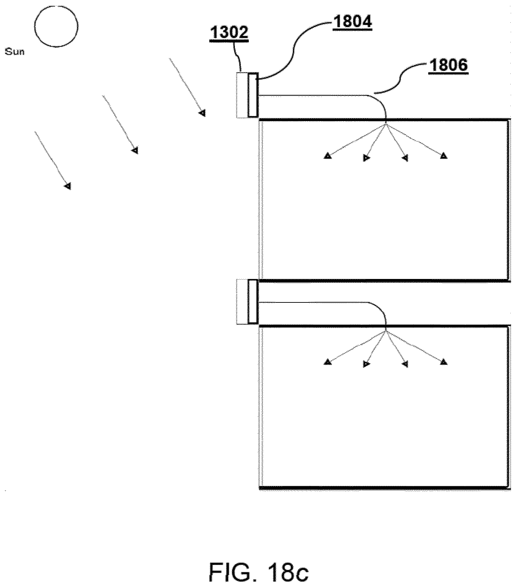

In another embodiment of the present invention as depicted in figure 18a, the active sunlight redirection system (1302) can be combined with a light concentrator array (1804), made for example by an array of Fresnel lenses, having one or more optical fibers (1806) at the focus of each lens. The optical fibers (1806) can be combined in a single optical fiber maze (1808). The present invention redirects sunlight so that it is perpendicular to the light concentrator that concentrates the redirected sunlight and injects it into the optical fibers (1806). This type of system is generically named hybrid solar lighting system and in figure 18b is depicted one such system disclosed in prior art. As showed in figure 18b these systems typically require a solar tracker that moves the light concentrator to aim it towards the sun. The present invention replaces the function of said solar tracker and the system becomes static so that it could be easily integrated in a building. The present invention could work with any type of light concentrators, as for example parabolic concentrators, like the one showed in figure 18b, or Fresnel lenses like the one showed in figure 16a, or with light guide concentrators like the one showed in figure 16b. In figure 18c it is depicted the use of this combined system (1302, 1804) in a multistory building. The combined system (1302, 1804) can be installed for example in the South façade, in the space between the floor of one level and the ceiling of the level below it. The sunlight is redirected by the light redirection system (1302) and is concentrated by a light concentrator array (1804) into the optical fiber maze (1808) that guides it to a point away from the window where the guided light is used to illuminate the indoor space.

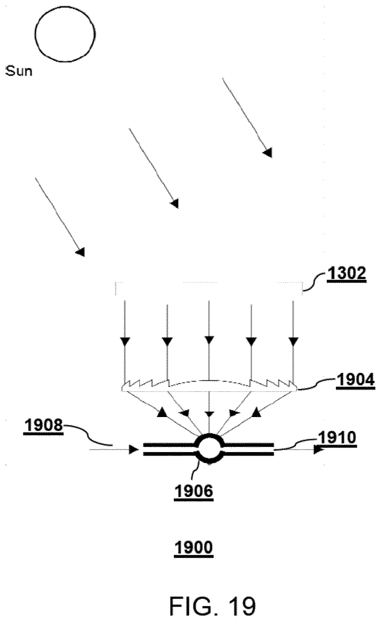

In an embodiment of the present invention as depicted in figure 19, the active sunlight redirection system (1302) is coupled to concentrated solar thermal (CST) module for generating heat from redirected sunlight. The system (1900) may have Fresnel lens (1904) for concentrating the redirected sunlight on a receiver (1906). The receiver (1906) may have an inlet (1908) and an outlet (1910) for the fluid passage. The concentrated solar light may heat the fluid contained in the receiver (1906) chamber and this heat can be transferred to the desired interior destinations of a building.

In another embodiment of the present invention, the active sunlight redirection system includes a wireless module. The wireless module enables the system to be controlled or switched on and off from external devices such as computers, tablets, mobile phones, smart phones and remote controls. It also allows the system to control external devices as for example indoor luminaries. The invention could utilize wireless networks that may include, but not limited to ZigBee, CDMA, GSM, UMTS, HSPA, EV-DO, EV-DO rev. A, 3GPP LTE, WiMAX, Wi-Fi, Bluetooth, Internet, telephony, or some other communication format including combinations thereof.

In an embodiment of the present invention, the active sunlight redirection system is having an interface, as for example a wireless network interface, with external devices that allows the system to perform one or more functionalities. These functionalities could be controlling, dimming and switching indoor luminaries, "see through" function with control of the vision angle, and sun blocking functionality reducing the heat gain in the building when indoor illumination is not required, for example, when an occupancy sensor would signal the absence of people in the area to be illuminated. In presence of sufficient illumination, the indoor luminaries can be controlled such that their intensities can be dimmed or they can be switched off. The external devices may include any device such as computer, mobile, tablet, smart phone or remotes etc. that can control or monitor or provide other functionalities to the system.

Further, the active sunlight redirection system is adapted to perform other functions such as generating historic performance report, remote servicing or troubleshooting and remote performance monitoring etc.

It should further be noted that the embodiments described above may be used in both ways either individually or two or more embodiments may be combined according to user's need. The embodiments should not be limited by their names. The principle and the mechanism to operate various components/embodiments should be taken care of. For example the purpose of placing the active sunlight redirection system at a window frame is to get direct sunlight onto the system; it may be placed at any other location in accordance with the user's need. Similarly, the active sunlight redirection system described in above embodiments is modular, the active sunlight redirection system could also be made in a non-modular way where a top and bottom transparent cases would serve the function of the top and bottom frame.

Rather, the foregoing detailed description will provide those skilled in the art with a convenient road map for implementing an exemplary embodiment of the invention, it being understood that various changes may be made in the methods and order of steps described in an exemplary embodiment without departing from the scope of the invention as set forth in the appended claims and their legal equivalents.

## Claims

1. An active sunlight redirection system (100) comprising
a light re-directing area having
a plurality of contiguous light redirecting modules,
forming a modular array;
and
comprising
movable prismatic discs
arranged as double prismatic discs,
and
top and bottom supporting frames,
the prismatic discs of every light re-directing module being associated
with the
top (604)
and
bottom (608)
supporting frames;
the prismatic discs of every light re-directing module
having teeth on their perimeter
to transmit rotational movement
using intercalated gears
between said prismatic discs
in contiguous light re-direction modules,
the active sunlight redirection system (100) further comprising
a light detecting module (532)
having one or more detecting elements
for detecting one or more environmental factors;
a control module (504)
associated with the light detecting module (532)
to control a movement
of said pairs of prismatic discs of the light re-directing modules (502) according to one or more environmental factors;
wherein
the light redirecting modules comprise
a plurality of first light re-directing modules (502)
and
at least one light re-directing module (503)
different from the first light re-directing modules (502)
wherein
in said at least one different light re-directing module (503) a feature is provided to define a home position for initializing the system from a known position for all discs in that
in said at least one different light re-directing module (503)
said prismatic discs comprising teeth on their perimeter
have one inter-teeth space (512) filled in
or
have more than one contiguous inter-teeth spaces (512) filled in,
to thereby provide an angular hard stop for all said prismatic discs.

2. The active sunlight redirection (100) system according to claim 1, wherein
said prismatic discs have two faces (406, 408),
one of said two faces being a flat face,
the other of said two faces being textured
as a regular array of linear prisms.

3. The active sunlight redirection system (100) according to the claim 1 or 2, wherein
the double prismatic discs of said plurality of contiguous light redirecting modules are arranged in layers
and the prismatic discs of one of said layers have a curvature in one side of the prisms; or
wherein a narrow beam diffuser is placed at one of:
a light output surface of the active sunlight redirection system,
a light input surface of the active sunlight redirection system,
and
both light output and light input surfaces of the active sunlight redirection system.

4. The active sunlight redirection system (100) according to claim 1, wherein
the intercalated gears are intercalated double coaxial gears.

5. The active sunlight redirection system (100) according to claim 1, wherein the control module (504) is adapted to initialize the active sunlight redirection system (100) from a known angular position before proceeding to track sunlight.

6. The active sunlight redirection system (100) according to claim 1, wherein the light detecting module (532) has input and output detecting elements for the detection of one or more environmental factors; preferably, input detecting elements for detecting intensity and elevation of input light and output detecting elements for detecting intensity and elevation of output light.

7. The active sunlight redirection system (100) according to claim 1 wherein said active sunlight redirection system is adapted for illumination of indoor spaces in that it is adapted to redirect light onto a reflector being configured to so redirect sunlight towards indoor spaces.

8. The active sunlight redirection system (100) according to claim 1, wherein said active sunlight redirection system is adapted for illumination of indoor spaces in a manner free from color aberration
in that it is adapted to redirect light onto a beam diffuser bounded to a reflector so that the redirected and reflected light is free from color aberration.

9. The active sunlight redirection system (100) according to claim 1, wherein at least one removable means, preferably a module mounting locking pin, is provided to ensure synchronized assembly of modules or discs or both modules and discs.

10. An active sunlight redirection system (100) according to claim 1 is further comprising a concentrated solar light panel (1600) comprising at least one of
one or more concentrated photovoltaic modules, the solar light panel (1600)
configured to produce electricity and provide for indoor illumination
or
configured to produce electricity only;
a hybrid solar lighting panel configured to produce indoor illumination;
and
a concentrated solar thermal panel comprising one or more concentrated solar thermal modules configured to produce heating.

11. The active sunlight redirection system (100) according to claim 1, which is adapted to integrate
into a standard insulated glazing unit of an opening (106) in a building, the opening
facing the exterior environment;
and/or
which is installed horizontally on the roof of a building and slightly protruding to one side and a reflector is arranged below it so that redirected sunlight from the system is aimed to a ceiling inside the building through the high part of a window;
and/or
wherein the active sunlight redirection system is coupled to a concentrated photovoltaic panel which is adapted to integrate in a vehicle's roof glazing or other external surfaces;
and/or
wherein the active sunlight redirection system is further coupled to a hybrid solar lighting panel and the hybrid solar lighting panel is comprised of one or more hybrid solar lighting modules to provide indoors illumination through optical fiber cables.

12. An active sunlight redirection system (100) according to the claim 1, further having an interface associated to a hardware module providing wireless remote operability.

13. The active sunlight redirection system (100) according to the claim 12, wherein the system is adapted to provide remote operability for one or more functionalities including at least one of controlling, dimming and/or switching of indoor luminaries, "see through" function with control of the vision angle, blocking of sun heat gain and/or generating historic performance reports, remote servicing and/or troubleshooting and/or remote performance monitoring.

14. The active sunlight redirection system (100) according to the claim 1, wherein
the light detecting module (532) having one or more detecting elements for detecting
one or more environmental factors is adapted to detect at least one of
elevation of sun,
azimuth of sun
and intensity of sunlight
as the one or more environmental factor.

15. A method of operating an active sunlight redirection system (100) according to one of the previous claims by rotating the discs,
the method comprising at least one of the following steps;
a) identifying a system states as an initialization state;
b) align all the discs against the angular hard stop in an initialization state of the system;
c) detecting the presence of direct sunlight having input sunlight intensity reading above a redefined threshold
and
having consistency with an input sunlight elevation reading;
d) estimating the sun elevation by readings of input sunlight intensity and input sunlight elevation;
e) rotating the discs as per the estimated sun elevation;
f) reading an output light fine error with a sensor and checking if the output light fine error sensor reading is outside its operating range and if that is the case, reading the output light rough error and scanning all the possible sun azimuth values until finding a local minimum reading of the sensor, otherwise go to step g)
g) reading the output light fine error and adjusting the sun azimuth estimation, adjusting the discs accordingly, until finding a local minimum reading of the sensor;
h) adjusting the sun elevation estimation and adjusting the discs accordingly, until finding a local minimum reading of the sensor;
i) checking if the azimuth and elevation estimation local minimums having changed and if so repeat the previous step from step f);
otherwise
identifying the system state as light locked state;
j) re-adjusting the position of the discs at fixed time intervals;
identifying the system state as dark locked state, in case of no direct sun light; otherwise,
repeating the steps from step f).

## Patentansprüche

1. Aktives Sonnenlichtumleitungssystem (100), umfassend
einen Lichtumleitungsbereich mit
einer Vielzahl von aneinandergrenzenden, Licht umleitenden Modulen, die eine modulare Anordnung bilden; und umfassend
bewegliche Prismenscheiben, die als doppelte Prismenscheiben angeordnet sind, und
obere und untere Halterahmen,
wobei die Prismenscheiben jedes Licht umleitenden Moduls den oberen (604) und unteren (608) Halterahmen zugeordnet sind;
die Prismenscheiben jedes Licht umleitenden Moduls Zähne an ihrem Umfang aufweisen, um unter Verwendung von ineinander greifenden Zahnrädern zwischen den Prismenscheiben in aneinandergrenzenden Lichtumleitungsmodulen Drehbewegung zu übertragen,
wobei das aktive Sonnenlichtumleitungssystem (100) ferner umfasst:
ein Lichterkennungsmodul (532) mit einem oder mehreren Erkennungselementen, um einen oder mehrere Umweltfaktoren zu erkennen;
ein Steuermodul (504), das dem Lichterkennungsmodul (532) zugeordnet ist, um eine Bewegung der Paare von Prismenscheiben der Licht umleitenden Module (502) gemäß dem einen oder den mehreren Umweltfaktoren zu steuern;
wobei
die Licht umleitenden Module eine Vielzahl von ersten Licht umleitenden Modulen (502) und mindestens ein Licht umleitendes Modul (503) umfasst, das sich von den ersten Licht umleitenden Modulen (502) unterscheidet, wobei in dem mindestens einen unterschiedlichen Licht umleitenden Modul (503) ein Merkmal bereitgestellt wird, um eine Grundstellung zum Initialisieren des Systems von einer bekannten Position für alle Scheiben dadurch zu definieren, dass
in dem mindestens einen unterschiedlichen Licht umleitenden Modul (503) die Prismenscheiben, die Zähne an ihrem Umfang umfassen einen Zwischenzahnraum (512), der ausgefüllt ist, oder mehr als einen, aneinandergrenzende Zwischenzahnräume (512), die ausgefüllt sind, um dadurch einen Winkelendanschlag für alle der Prismenscheiben bereitzustellen.

2. Aktives Sonnenlichtumleitungssystem (100) nach Anspruch 1, wobei die Prismenscheiben zwei Seiten (406, 408) aufweisen, wobei eine der Seiten eine flache Seite ist und die andere der beiden Seiten als regelmäßige Anordnung linearer Prismen texturiert ist.

3. Aktives Sonnenlichtumleitungssystem (100) nach Anspruch 1 oder 2, wobei
die doppelten Prismenscheiben der Vielzahl von aneinandergrenzenden, Licht umleitenden Modulen in Schichten angeordnet sind und die Prismenscheiben von einer der Schichten eine Krümmung in einer Seite der Prismen aufweisen; oder
wobei ein schmaler Strahldiffusor an einer der folgenden platziert ist:
einer Lichtausgangsfläche des aktiven Sonnenlichtumleitungssystems,
einer Lichteingangsfläche des aktiven Sonnenlichtumleitungssystems und
sowohl Lichtausgangs- als auch Lichteingangsflächen des aktiven Sonnenlichtumleitungssystems.

4. Aktives Sonnenlichtumleitungssystem (100) nach Anspruch 1, wobei die ineinandergreifenden Zahnräder ineinandergreifende doppelt koaxiale Zahnräder sind.

5. Aktives Sonnenlichtumleitungssystem (100) nach Anspruch 1, wobei das Steuermodul (504) vorgesehen ist, um das aktive Sonnenlichtumleitungssystem (100) von einer bekannten Winkelposition aus zu initialisieren, bevor mit dem Verfolgen von Sonnenlicht fortgefahren wird.

6. Aktives Sonnenlichtumleitungssystem (100) nach Anspruch 1, wobei das Lichterkennungsmodul (532) Eingangs- und Ausgangserkennungselemente zum Erkennen von einem oder mehreren Umweltfaktoren aufweist; vorzugsweise Eingangserkennungselemente zum Erkennen von Intensität und Elevation von Eingangslicht und Ausgangserkennungselemente zum Erkennen von Intensität und Elevation von Ausgangslicht.

7. Aktives Sonnenlichtumleitungssystem (100) nach Anspruch 1, wobei das aktive Sonnenlichtumleitungssystem zur Beleuchtung von Innenräumen vorgesehen ist, wobei es zum Umleiten von Licht auf einen Reflektor vorgesehen ist, der dazu ausgestaltet ist, Sonnenlicht zu Innenräumen umzuleiten.

8. Aktives Sonnenlichtumleitungssystem (100) nach Anspruch 1, wobei das aktive Sonnenlichtumleitungssystem zur Beleuchtung von Innenräumen dadurch in einer Weise vorgesehen ist, die frei von Farbaberrationen ist, dass es vorgesehen ist, um Licht auf einen Strahldiffuser umzuleiten, der an einen Reflektor gebunden ist, so dass das umgeleitete und reflektierte Licht frei von Farbaberration ist.

9. Aktives Sonnenlichtumleitungssystem (100) nach Anspruch 1, wobei mindestens ein entfernbares Mittel, vorzugsweise ein Arretierstift für die Modulmontage, bereitgestellt wird, um synchronisierten Zusammenbau von Modulen oder Scheiben oder sowohl Modulen als auch Scheiben zu gewährleisten.

10. Aktives Sonnenumleitungssystem (100) nach Anspruch 1, das des Weiteren ein konzentriertes Solarlichtpanel (1600) umfasst, das mindestens eines von einem oder mehreren konzentrierten Photovoltaikmodulen, wobei das Solarlichtpanel (1600)
ausgestaltet ist, um Elektrizität zu produzieren und Beleuchtung im Innenbereich bereitzustellen, oder
ausgestaltet ist, um ausschließlich Strom zu produzieren;
einem Hybrid-Solarlichtpanel, das ausgestaltet ist, um Beleuchtung im Innenbereich zu produzieren; und
einem konzentrierten thermischen Solarpanel umfasst, das ein oder mehrere konzentrierte thermische Solarmodule umfasst, die ausgestaltet sind, um Erwärmung zu produzieren.

11. Aktives Sonnenlichtumleitungssystem (100) nach Anspruch 1, das vorgesehen ist, um in eine isolierte Standardverglasungseinheit einer Öffnung (106) in einem Gebäude integriert zu werden, wobei die Öffnung zu der Außenumgebung weist; und/oder
das horizontal auf dem Dach eines Gebäudes installiert ist und leicht zu einer Seite vorsteht, und wobei darunter ein Reflektor angeordnet ist, so dass umgeleitetes Sonnenlicht aus dem System durch den oberen Teil eines Fensters auf eine Decke im Inneren des Gebäudes zielt; und/oder
wobei das aktive Sonnenlichtumleitungssystem an ein konzentriertes Photovoltaikpanel gekoppelt ist, das vorgesehen ist, um in die Verglasung eines Fahrzeugdaches oder sonstige Außenoberflächen integriert zu werden; und/oder
wobei das aktive Sonnenlichtumleitungssystem des Weiteren an ein Hybrid-Solarlichtpanel gekoppelt ist und das Hybrid-Solarbeleuchtungspanel aus einem oder mehreren Hybrid-Solarlichtmodulen zusammengesetzt ist, um über Lichtleiterkabel Beleuchtung im Innenbereich bereitzustellen.

12. Aktives Sonnenlichtumleitungssystem (100) nach Anspruch 1, das ferner eine Schnittstelle aufweist, die einem Hardware-Modul zugeordnet ist, wodurch drahtlose Fernbedienbarkeit bereitgestellt wird.

13. Aktives Sonnenlichtumleitungssystem (100) nach Anspruch 12, wobei das System vorgesehen ist, um Fernbedienbarkeit für eine oder mehrere Funktionalitäten bereitzustellen, einschließlich mindestens einem von Steuern, Dimmen und/oder Schalten von Leuchten im Innenbereich, "Durchguck"-Funktion mit Steuerung des Sichtwinkels, Blockieren des Aufheizens durch die Sonne und/oder Generieren von Berichten über Leistungshistorien, Fernwartung und/oder Fehlerbehebung aus der Ferne und/oder Fernleistungsüberwachung.

14. Aktives Sonnenlichtumleitungssystem (100) nach Anspruch 1, wobei das Lichterkennungsmodul (532) mit einem oder mehreren Erkennungselementen zum Erkennen von einem oder mehreren Umweltfaktoren vorgesehen ist, um mindestens eine(n) von Elevation der Sonne, Azimut der Sonne und Intensität des Sonnenlichts als den einen oder die mehreren Umweltfaktoren zu erkennen.

15. Verfahren zum Betreiben eines aktiven Sonnenlichtumleitungssystems (100) nach einem der vorhergehenden Ansprüche durch Drehen der Scheiben,
wobei das Verfahren mindestens einen der folgenden Schritte umfasst:
a) Identifizieren eines Systemstatus als Initialisierungsstatus;
b) Ausrichten aller Scheiben gegen den harten Winkelanschlag in einem Initialisierungsstatus des Systems;
c) Erkennen der Anwesenheit von direktem Sonnenlicht mit einer Ablesung der Eingangssonnenlichtintensität oberhalb eines vordefinierten Schwellenwerts und in Übereinstimmung mit einer Ablesung der Eingangssonnenlichtelevation;
d) Schätzen der Sonnenlichtelevation durch Ablesungen der Eingangssonnenlichtintensität und der Eingangssonnenlichtelevation;
e) Drehen der Scheiben gemäß der geschätzten Sonnenelevation;
f) Ablesen eines Ausgangslichtfeinfehlers mit einem Sensor, und Prüfen, ob die Ablesung des Ausgangslichtfeinfehlersensors außerhalb seines Betriebsbereichs ist, und falls dies der Fall ist, Ablesen des Ausgangslichtgrobfehlers und Scannen aller möglichen Sonnenazimutwerte, bis eine lokale Minimumablesung des Sensors gefunden wird, ansonsten Gehen zu Schritt g),
g) Ablesen des Ausgangslichtfeinfehlers und Anpassen der Sonnenazimutschätzung, entsprechendes Anpassen der Scheiben, bis eine lokale Minimumablesung des Sensors gefunden wird;
h) Anpassen der Sonnenelevationsschätzung und entsprechendes Anpassen der Scheiben, bis eine lokale Minimumablesung des Sensors gefunden wird;
i) Kontrollieren, ob sich die lokalen Minima für Azimut- und Elevationsschätzung verändert haben, und falls ja, Wiederholen der vorhergehenden Schritte von Schritt f); ansonsten Identifizieren des Systemstatus als lichtgesperrten Status;
j) erneutes Anpassen der Position der Scheiben in festen Zeitintervallen; Identifizieren des Systemstatus als dunkelgesperrten Status im Fall von fehlendem direktem Sonnenlicht; anderenfalls Wiederholen der Schritte von Schritt f).

## Revendications

1. Système actif de redirection de lumière solaire (100) comprenant
une région de redirection de lumière comportant
une pluralité de modules de redirection de lumière contigus,
formant un réseau modulaire ;
et comprenant
des disques prismatiques mobiles conçus sous la forme de doubles disques prismatiques,
et
des cadres de support supérieur et inférieur,
les disques prismatiques de chaque module de redirection de lumière étant associés aux cadres de support supérieur (604) et inférieur (608) ;
les disques prismatiques de chaque module de redirection de lumière comportant des dents sur leur périmètre afin de transmettre un mouvement de rotation au moyen de roues dentées intercalaires entre lesdits disques prismatiques dans des modules de redirection de lumière contigus,
le système actif de redirection de lumière solaire (100) comprenant en outre
un module de détection de lumière (532) comportant un ou plusieurs éléments de détection servant à détecter un ou plusieurs facteurs environnementaux ;
un module de commande (504) associé au module de détection de lumière (532) afin de commander un mouvement desdites paires de disques prismatiques des modules de redirection de lumière (502) en fonction d'un ou de plusieurs facteurs environnementaux ;
les modules de redirection de lumière comprenant
une pluralité de premiers modules de redirection de lumière (502)
et
au moins un module de redirection de lumière (503) différent des premiers modules de redirection de lumière (502)
un élément étant prévu, dans ledit ou lesdits modules de redirection de lumière différents (503) afin de définir une position initiale pour initialiser le système à partir d'une position connue pour tous les disques
en ce que
dans ledit ou lesdits modules de redirection de lumière différents (503), lesdits disques prismatiques comprenant des dents sur leur périmètre
présentent un espace entre-dent (512) rempli
ou
présentent plusieurs espaces entre-dents (512) contigus remplis, de façon à former une butée angulaire dure pour tous lesdits disques prismatiques.

2. Système actif de redirection de lumière solaire (100) selon la revendication 1, dans lequel lesdits disques prismatiques comportent deux faces (406, 408),
l'une desdites deux faces étant une face plane, l'autre desdites deux faces étant texturée sous la forme d'un réseau régulier de prismes linéaires.

3. Système actif de redirection de lumière solaire (100) selon la revendication 1 ou 2, dans lequel les doubles disques prismatiques de ladite pluralité de modules de redirection de lumière contigus sont disposés en couches
et les disques prismatiques de l'une desdites couches présentent une courbure dans un côté des prismes ;
ou
dans lequel un diffuseur de faisceau étroit est placé à un endroit parmi :
une surface de sortie de lumière du système actif de redirection de lumière solaire,
une surface d'entrée de lumière du système actif de redirection de lumière solaire,
et
à la fois des surfaces de sortie de lumière et d'entrée de lumière du système actif de redirection de lumière solaire.

4. Système actif de redirection de lumière solaire (100) selon la revendication 1, dans lequel les roues dentées intercalaires sont des doubles roues dentées coaxiales intercalaires.

5. Système actif de redirection de lumière solaire (100) selon la revendication 1, dans lequel le module de commande (504) est conçu pour initialiser le système actif de redirection de lumière solaire (100) à partir d'une position angulaire connue avant de commencer à suivre la lumière solaire.

6. Système actif de redirection de lumière solaire (100) selon la revendication 1, dans lequel le module de détection de lumière (532) comporte des éléments de détection d'entrée et de sortie servant à la détection d'un ou plusieurs facteurs environnementaux ; de préférence, des éléments de détection d'entrée servant à détecter l'intensité et l'élévation de la lumière entrante et des éléments de détection de sortie servant à détecter l'intensité et l'élévation de la lumière sortante.

7. Système actif de redirection de lumière solaire (100) selon la revendication 1, ledit système actif de redirection de lumière solaire étant conçu pour éclairer des espaces intérieurs en ce qu'il est conçu pour rediriger la lumière sur un réflecteur configuré pour rediriger ainsi la lumière solaire en direction d'espaces intérieurs.

8. Système actif de redirection de lumière solaire (100) selon la revendication 1, ledit système actif de redirection de lumière solaire étant conçu pour éclairer des espaces intérieurs sans aberration chromatique en ce qu'il est conçu pour rediriger la lumière sur un diffuseur de faisceau limité à un réflecteur de telle sorte que la lumière redirigée et réfléchie soit dépourvue d'aberration chromatique.

9. Système actif de redirection de lumière solaire (100) selon la revendication 1, dans lequel au moins un moyen amovible, de préférence une goupille de verrouillage d'installation de module, est prévu pour garantir un assemblage synchronisé de modules ou de disques ou à la fois de modules et de disques.

10. Système actif de redirection de lumière solaire (100) selon la revendication 1, comprenant en outre un panneau à lumière solaire concentré (1600) comprenant au moins un des éléments suivantes :
un ou plusieurs modules photovoltaïques concentrés, la panneau à lumière solaire (1600)
étant configuré pour produire de l'électricité et assurer un éclairage en intérieur
ou
étant configuré pour produire de l'électricité uniquement ;
un panneau d'éclairage solaire hybride configuré pour produire un éclairage en intérieur ;
et
un panneau thermique solaire concentré comprenant un ou plusieurs modules thermiques solaires concentrés configurés pour produire de la chaleur.

11. Système actif de redirection de lumière solaire (100) selon la revendication 1, qui est conçu pour s'intégrer dans une unité de vitrage isolée standard d'une ouverture (106) dans un bâtiment, l'ouverture étant orientée vers l'environnement extérieur ; et/ou qui est installé horizontalement sur le toit d'un bâtiment et fait légèrement saillie d'un côté et un réflecteur est disposé sous lui de telle sorte que la lumière solaire redirigée à partir du système est orientée vers un plafond à l'intérieur du bâtiment à travers la partie supérieure d'une fenêtre ;
et/ou
le système actif de redirection de lumière solaire étant accouplé à un panneau photovoltaïque concentré qui est conçu pour s'intégrer dans un vitrage de toit ou d'autres surfaces extérieures d'un véhicule ;
et/ou
le système actif de redirection de lumière solaire étant en outre accouplé à un panneau d'éclairage solaire hybride et le panneau d'éclairage solaire hybride est constitué d'un ou plusieurs modules d'éclairage solaires hybrides afin d'assurer un éclairage en intérieur par le biais de câbles à fibre optique.

12. Système actif de redirection de lumière solaire (100) selon la revendication 1, comportant en outre une interface associée à un module matériel assurant une exploitabilité à distance sans fil.

13. Système actif de redirection de lumière solaire (100) selon la revendication 12, le système étant conçu pour assurer une exploitabilité à distance pour une ou plusieurs fonctionnalités comprenant au moins une fonctionnalité parmi la commande, l'atténuation et/ou la commutation d'appareils d'éclairage d'intérieur, une fonction de « transparence » avec commande de l'angle de vision, le blocage d'un gain de chaleur solaire et/ou la génération de rapports de performance historique, l'entretien à distance et/ou le dépannage et/ou la surveillance de la performance à distance.

14. Système actif de redirection de lumière solaire (100) selon la revendication 1, dans lequel le module de détection de lumière (532) comportant un ou plusieurs éléments de détection servant à détecter un ou plusieurs facteurs environnementaux est conçu pour détecter au moins un facteur parmi l'élévation du soleil,
l'azimut du soleil,
et l'intensité de la lumière solaire en tant que facteur(s) environnemental/environnementaux.

15. Procédé d'exploitation d'un système actif de redirection de lumière solaire (100) selon l'une des revendications précédentes par rotation des disques,
le procédé comprenant au moins une des étapes suivantes :
a) identifier un état du système comme un état d'initialisation ;
b) aligner tous les disques contre la butée angulaire dure dans un état d'initialisation du système ;
c) détecter la présence de lumière solaire directe présentant une valeur mesurée d'intensité de lumière solaire entrante supérieure à un seuil prédéfini et concordant avec une valeur mesurée d'élévation de lumière solaire entrante ;
d) estimer l'élévation du soleil à l'aide de valeurs mesurées d'intensité de lumière solaire entrante et d'élévation de lumière solaire entrante ;
e) tourner les disques en fonction de l'élévation estimée du soleil ;
f) mesurer une erreur fine de lumière sortante au moyen d'un capteur et vérifier si la valeur mesurée du capteur d'erreur fine de lumière sortante se situe en dehors de sa plage de fonctionnement et, si tel est le cas, mesurer l'erreur grossière de lumière sortante et balayer toutes les valeurs d'azimut du soleil possibles jusqu'à trouver une valeur mesurée locale minimale du capteur, sinon passer à l'étape g) ;
g) mesurer l'erreur fine de lumière sortante et ajuster l'estimation d'azimut du soleil, ajuster les disques en conséquence, jusqu'à trouver une valeur mesurée locale minimale du capteur ;
h) ajuster l'estimation d'élévation du soleil et ajuster les disques en conséquence, jusqu'à trouver une valeur mesurée locale minimale du capteur ;
i) vérifier si les valeurs locales minimales d'estimation d'azimut et d'élévation ont changé et, si tel est le cas, répéter les étapes précédentes à partir de l'étape f) ;
sinon
identifier l'état du système comme un état verrouillé de luminosité ;
j) réajuster la position des disques à intervalles temporels fixes ;
identifier l'état du système comme un état verrouillé d'obscurité en cas d'absence de lumière solaire directe ;
sinon
répéter les étapes à partir de l'étape f).
